# EUROPEAN PATENT APPLICATION

(11) **EP 4 769 909 A1**
(43) Date of publication of application: **01.07.2026**
(21) Application number: 24856467.6
(22) Date of filing: 21.08.2024
(51) Int. Cl.: H02K 5/22, H02K 5/18

(54) **ROTATING ELECTRICAL MACHINE**

(30) Priority: 22.08.2023 JP 2023134879
(71) Applicant: Minebea Mitsumi Inc., Kitasaku-gun, Nagano 3890293 (JP)
(72) Inventor: OHNO, Yuuma, Kitasaku-gun, Nagano 389-0293 (JP); TORIUMI, Shuto, Kitasaku-gun, Nagano 389-0293 (JP)
(74) Representative: Winter, Brandl - Partnerschaft mbB
(86) International application number: PCT/JP2024/029570
(87) International publication number: WO 2025/041779

(57) **Abstract**

A rotary electric machine (1) includes a motor (2), a substrate (50), a terminal block (5), and a heat sink (40). The terminal block (5) includes a terminal (80), and the substrate (50) is fixed to the terminal block (5). The heat sink (40) accommodates the motor (2), the substrate (50), and the terminal block (5). The heat sink (40) includes an opening (41), and a part (60) of the terminal block (5) is inserted into the opening (41). The opening part (41) has an inner surface (42) opposed to the part (60) of the terminal block (5). The terminal block (5) includes a tubular part (60) having an outer surface (62) opposed to the inner surface (42). An elastic member (6) is disposed between the inner surface (42) and the outer surface (62).

## Description

### Technical Field

The present invention relates to a rotary electric machine.

### Background Art

In a cooling fan used in an electronic device or the like, a technique is known. In the technique, a partition wall plate and a seal member are included in order to secure waterproofness of the electronic device or the like. In such a configuration, a terminal is formed at a motor substrate in a state of being exposed from an opening part.

### Citation List

### Patent Literature

### Patent Document 1: JP 2014-223000 A

### Summary of Invention

### Technical Problem

However, in such a configuration, it is difficult to align the motor substrate and the electronic device connected through the terminal, and assemblability of the electronic device or the like may be reduced.

In one aspect, a rotary electric machine capable of improving the assemblability of the terminal is to be provided.

### Solution to Problem

In one aspect, a rotary electric machine includes a motor, a substrate, a terminal block, and a heat sink. The terminal block includes a terminal, and the substrate is fixed to the terminal block. The heat sink accommodates the motor, the substrate, and the terminal block. The heat sink includes an opening, and a part of the terminal block is inserted into the opening. The opening has an inner surface opposed to the part of the terminal block. The terminal block includes a tubular part having an outer surface opposed to the inner surface. An elastic member is disposed between the inner surface and the outer surface.

One aspect allows the assemblability of the terminal to be improved.

### Brief Description of Drawings

FIG. 1 is a top view illustrating an example of a fan motor of an embodiment.
FIG. 2 is an exploded perspective view illustrating an example of the fan motor of an embodiment.
FIG. 3 is a side sectional view illustrating an example of the fan motor of an embodiment.
FIG. 4 is a side sectional view illustrating another example of the fan motor of an embodiment.
FIG. 5 is an enlarged sectional view illustrating an example of the fan motor of an embodiment.
FIG. 6 is a perspective view illustrating an example of a plate part in a modified example.

### Description of Embodiments

Hereinafter, an embodiment of the rotary electric machine disclosed in the present application will be described in detail based on the drawings. Note that the dimensional relationship between elements and the ratio of each element in the drawings may differ from reality. Some parts may differ from each other in dimensional relationship and ratio between drawings. In each drawing, for easy understanding of the description, a coordinate system may be illustrated with an extending direction of a shaft 31 to be described later being a Z-axis direction, a side disposing an impeller 9 being a positive direction side in the Z-axis, and a side disposing a heat sink 40 being a negative direction side in the Z-axis.

### Embodiment

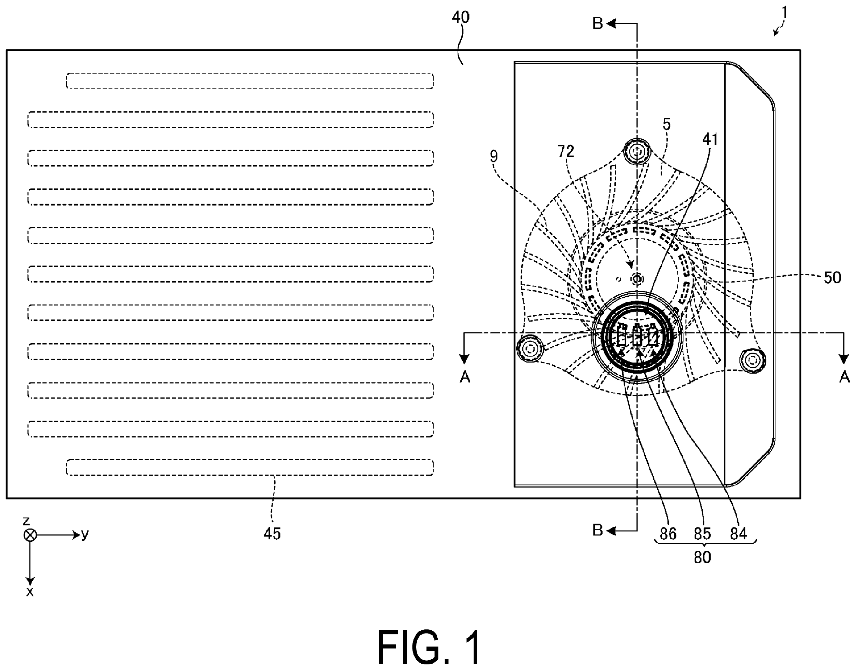

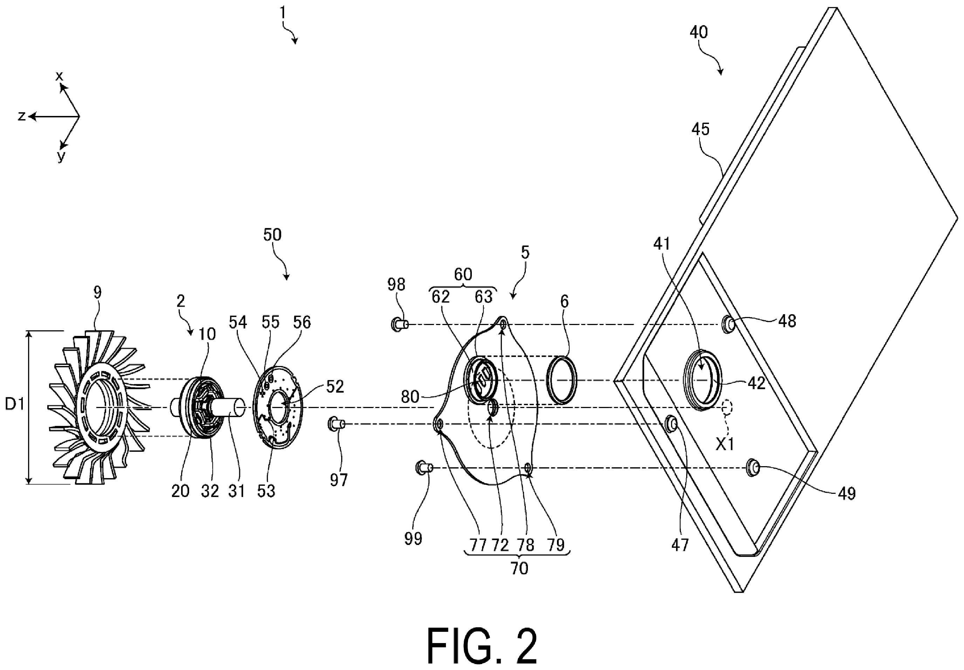

First, a fan motor of an embodiment is described with reference to FIGS. 1 and 2. FIG. 1 is a top view illustrating an example of the fan motor of an embodiment. FIG. 2 is an exploded perspective view illustrating an example of the fan motor of an embodiment. Note that the fan motor 1 is an example of the rotary electric machine.

As illustrated in FIG. 2, the fan motor 1 includes a motor 2, a substrate 50, a terminal block 5, an impeller 9, and a heat sink 40. In FIG. 1, the heat sink 40 and the terminal block 5 are illustrated transparently. Thus, as illustrated by broken lines, the fins 45 formed at the positive direction side of the heat sink 40 in the Z-axis direction, and the substrate 50 and the impeller 9 disposed at the positive direction side in the Z-axis direction with respect to the heat sink 40 are visible.

The heat sink 40 accommodates the motor 2, the substrate 50, and the terminal block 5. The heat sink 40 includes an opening 41 and a plurality of the fins 45. An electronic device (not illustrated) or the like is disposed at the heat sink 40. The electronic device or the like is disposed, as a cooling target at, for example, a location opposed to the fin 45 in the Z-axis direction. The heat sink 40 is formed of, for example, a metal such as aluminum die cast. Screw grooves 47 to 49 screwed with screws 97 to 99 illustrated in FIG. 2 may be formed at the heat sink 40.

The opening 41 is a through-hole penetrating the heat sink 40 in the Z-axis direction and has, for example, a substantially circular cross section. As illustrated in FIG. 2, the opening 41 has an inner surface 42.

The substrate 50 is fixed to the terminal block 5. As illustrated in FIG. 2, the terminal block 5 includes a tubular part 60, a plate part 70, and three terminals 80. The terminal block 5 is coupled to the heat sink 40 by, for example, the screws 97 to 99 illustrated in FIG. 2.

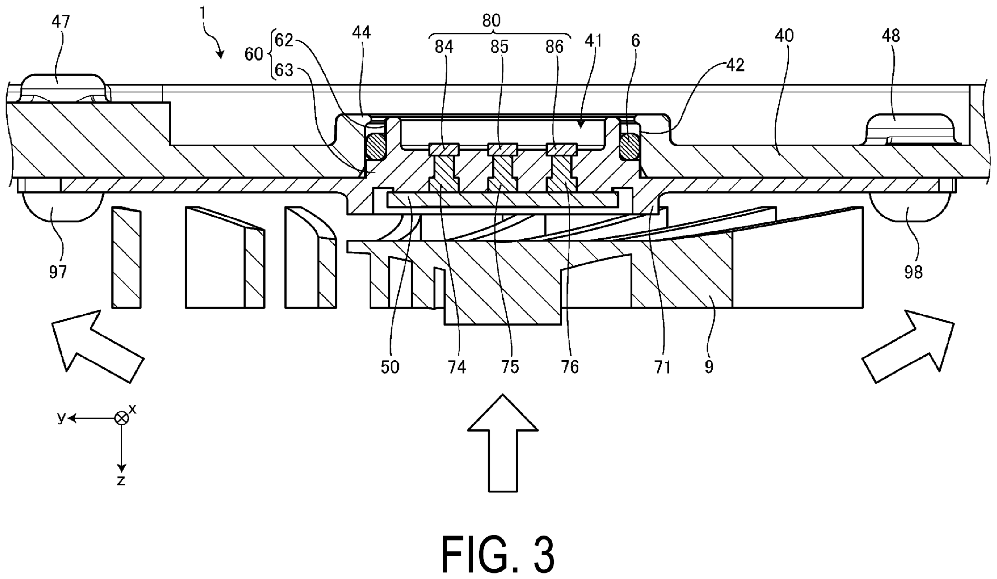

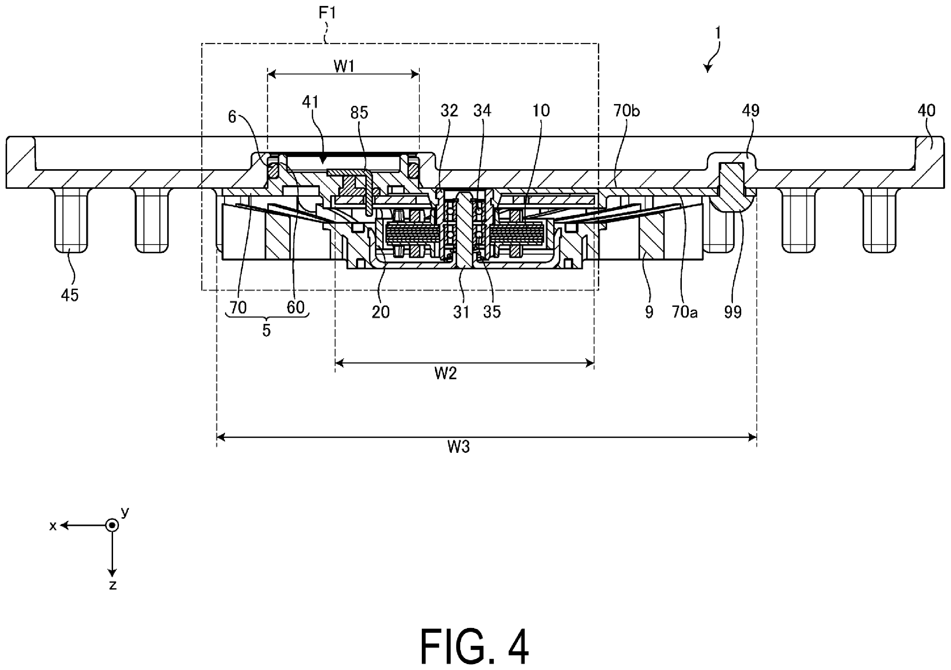

The terminal 80 connects an external power supply or control circuit (not illustrated) to the substrate 50. As illustrated in FIGS. 2 to 4, the three terminals 80 are fixed to the tubular part 60 of the terminal block 5 so as to penetrate the terminal block 5 in the Z-axis direction and to be arranged in a Y-axis direction. FIG. 3 is a side sectional view illustrating an example of the fan motor of an embodiment. FIG. 4 is a side sectional view illustrating another example of the fan motor of an embodiment. FIG. 3 illustrates a cross section taken along a line A-A in FIG. 1. FIG. 4 illustrates a cross section taken along a line B-B in FIG. 1. In the following description, when distinguished, as illustrated in FIG. 3, the terminals 80 may be respectively referred to as terminals 84, 85, and 86 in order from the positive direction side in the Y-axis. The terminals 84 to 86 are fixed to the terminal block 5 by, for example, insert molding, so as to extend from the interior of the heat sink 40 to the exterior thereof through the opening 41 (from the positive direction side to the negative direction side in the Z-axis direction).

The tubular part 60 is a substantially circular part protruding at the negative direction side in the Z-axis direction of the terminal block 5. As illustrated in FIG. 3, the tubular part 60 has an outer surface 62 and a step part 63. The tubular part 60 is inserted into the opening 41 of the heat sink 40. In this case, as illustrated in FIG. 3, the outer surface 62 is opposed to the inner surface 42 of the opening 41 of the heat sink 40. The tubular part 60 is an example of a part of the terminal block.

In an embodiment, as illustrated in FIGS. 2 and 3, an O-ring 6 is disposed between the inner surface 42 of the opening 41 of the heat sink 40 and the outer surface 62 of the tubular part 60 of the terminal block 5. The O-ring 6 is an annular member formed of, for example, an elastic body such as rubber and having a sealing function. The terminal block 5 is inserted into the opening 41 in a state of, for example, the O-ring 6 being disposed at the step part 63 of the tubular part 60. Thus, the O-ring 6 serves as a packing in a state of being sandwiched between the outer surface 62 of the tubular part 60 and the inner surface 42 of the opening 41, and thus the opening 41 and the tubular part 60 are sealed. The O-ring 6 is an example of an elastic member.

As illustrated in FIG. 3, the opening 41 may include a flange 44 protruding at the inside in the radial direction at the negative direction side in the Z-axis. In such a configuration, for example, the O-ring 6 can be prevented from coming off at the negative direction side in the Z-axis, and other members can be prevented from coming into contact with the O-ring 6. By ensuring a clearance between the outer surface 62 of the tubular part 60 and the flange 44 of the opening 41 to some extent, in addition to the above effect, forgetting to assemble the O-ring 6 can be easily visually recognized.

As illustrated in FIGS. 2 and 4, the plate part 70 of the terminal block 5 is located at the positive direction side in the Z-axis with respect to the tubular part 60, and extends in a direction intersecting the tubular part 60, for example, in the X-axis direction and the Y-axis direction. As illustrated in FIG. 2 or 3, a flange 71, a through-hole 72, and terminal support parts 74 to 76 are formed at the plate part 70. The terminal support parts 74 to 76 are, for example, fillers described later. As illustrated in FIG. 2, screw holes 77 to 79 screwed with the screws 97 to 99, respectively, may be formed at the plate part 70.

As illustrated in FIG. 3, the flange 71 protrudes at the positive direction side in the Z-axis and is formed in a substantially annular shape so as to surround the substrate 50 from the outside in the radial direction. As illustrated in FIG. 2, the shaft 31 of the motor 2 is inserted through the through-hole 72 from the positive direction side in the Z-axis. As illustrated in FIG. 3, the terminal support parts 74 to 76 support the terminals 84 to 86, respectively, from the positive direction side in the Z-axis. In FIG. 2, the flange 71 is not visible.

The impeller 9 rotates in conjunction with the motor 2, and thus sucks air from the positive direction side in the Z-axis and discharges air in a direction intersecting the Z-axis as indicated by arrows in FIG. 3. Thus, as illustrated in FIG. 1, the fin 45 disposed at the negative direction side of the impeller 9 in the Y-axis is cooled. The impeller 9 is formed of, for example, resin.

The motor 2 includes bearings 34 and 35 illustrated in FIG. 4 in addition to a stator 10, a rotor 20, the shaft 31, and a bearing holder 32 illustrated in FIG. 2. As illustrated in FIG. 4, the motor 2 of an embodiment is a so-called outer-rotor type motor with the rotor 20 disposed at the outside in the radial direction with respect to the stator 10. The bearings 34 and 35 are accommodated at the bearing holder 32 and are not visible in FIG. 2.

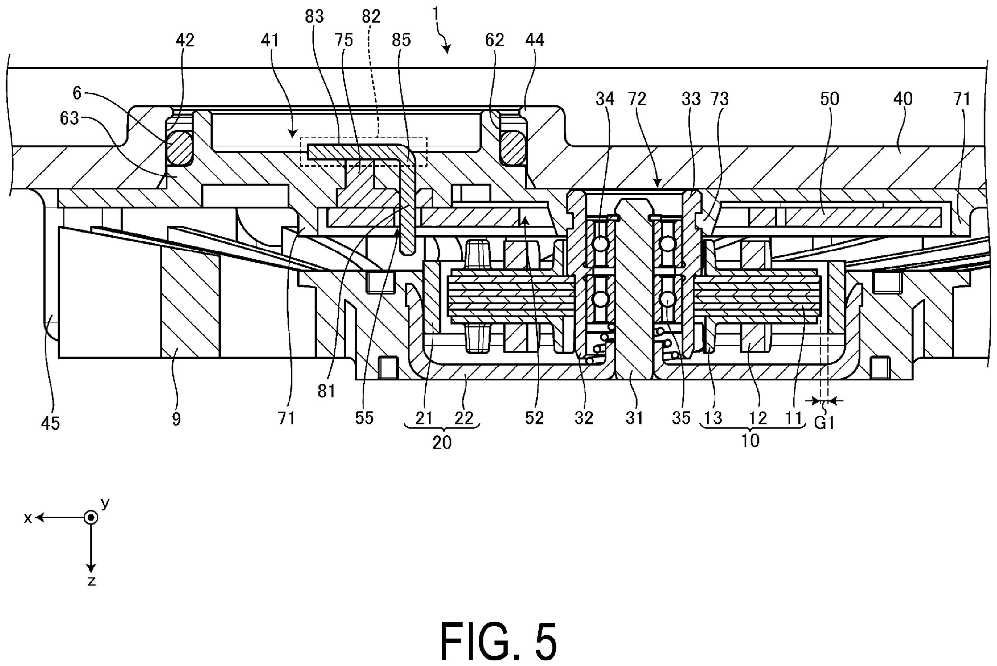

As illustrated in FIG. 5, the stator 10 includes a stator core 11, a coil 12, and an insulator 13. FIG. 5 is an enlarged sectional view illustrating an example of the fan motor of an embodiment. FIG. 5 is an enlarged view of a part indicated by a frame F1 in FIG. 4. The stator core 11 is an annular member formed by stacking, for example, a plurality of a magnetic body such as stainless steel or an electromagnetic steel plate in the Z-axis direction. The insulator 13 is formed of an insulation body, such as resin. The insulator 13 covers, for example, the stator core 11 from both the positive direction side and the negative direction side in the Z-axis direction. The coil 12 is wound around the stator core 11 via the insulator 13. The coil 12 is connected to, for example, a wiring 53 of the substrate 50 illustrated in FIG. 2.

As illustrated in FIG. 5, the rotor 20 includes a magnet 21 and a holder 22. The magnet 21 is a permanent magnet such as a neodymium magnet having a substantially cylindrical shape, and is disposed at the outside of the stator 10 in the radial direction. The holder 22 holds the magnet 21. The holder 22 couples the shaft 31 and the impeller 9. The shaft 31 is rotatably supported by the bearing holder 32 via the bearings 34 and 35. In such a configuration, the shaft 31 serves as a rotation axis of the motor 2 and the impeller 9. The shaft 31 and the impeller 9 rotate in conjunction with the rotation of the rotor 20.

The bearing holder 32 is fixed to the terminal block 5. In an embodiment, as illustrated in FIG. 5, an engagement part 33 formed at the bearing holder 32 and an engaged part 73 formed at the plate part 70 of the terminal block 5 are engaged. The engaged part 73 is formed, for example, in a substantially annular shape so as to surround the through-hole 72 and protrudes at the positive direction side in the Z-axis as illustrated in FIG. 5. In such a configuration, it is not necessary to interpose a member for holding the stator 10 at the heat sink 40 between the stator 10 and the rotor 20. Thus, deterioration of motor characteristics due to an increase in a gap G1 between the stator 10 and the rotor 20 illustrated in FIG. 5 can be suppressed.

The substrate 50 supplies electric power to the motor 2 via the terminal 80 and the wiring 53 illustrated in FIG. 2. The substrate 50 of an embodiment is an annular printed substrate formed of, for example, resin, and including a substantially circular opening 52 as illustrated in FIG. 2. The substrate 50 is disposed at a location where, for example, the shaft 31 of the motor 2 is inserted through the opening 52.

In an embodiment, the substrate 50 is assembled to the terminal block 5 in a state of the terminal block 5 being assembled to the heat sink 40 in advance. In such a configuration, the substrate 50 is assembled in a state of the waterproofness of the electronic device or the like being ensured, and thus the assemblability of the substrate 50 is improved.

The terminals 84 to 86 are electrically connected to the substrate 50 by, for example, being soldered in a state of being inserted through the terminal holes 54 to 56, respectively, of the substrate 50 illustrated in FIG. 2. More specifically, as illustrated in FIG. 3, a part (an exposed surface 83 of a second part 82 described later) of end parts of the terminals 84 to 86 fixed to the terminal block 5 at the negative direction side in the Z-axis is exposed from the opening 41 and connected to a power supply or the like (not illustrated). End parts (first parts 81 described later) of the terminals 84 to 86 at the positive direction side in the Z-axis illustrated in FIG. 3 are inserted through the terminal holes 54 to 56 of the substrate 50 illustrated in FIG. 2, respectively.

In an embodiment, the terminals 84 to 86 are inserted through the terminal holes 54 to 56 of the substrate 50, respectively, in a state of being fixed to the terminal block 5 by insert molding. In such a configuration, the terminals 84 to 86 can be easily inserted through the terminal holes 54 to 56 of the substrate 50, and thus the assemblability of the terminals can be improved.

In an embodiment, as illustrated in FIG. 4, a width W1 of the opening 41 of the heat sink 40 in the radial direction is smaller than a width W2 of the substrate 50 in the radial direction. In such a configuration, the substrate 50 is not accommodated in the opening 41 in the Z-axis direction.

The opening 41, the terminal block 5, and the substrate 50 are arranged in this order from the negative direction side in the Z-axis direction. In this state, as illustrated in FIG. 2, the plate part 70 is disposed at a location sandwiched between the opening 41 and the substrate 50 when viewed from the Z-axis direction. Further, in an embodiment, a width W3 of the plate part 70 of the terminal block 5 in the radial direction illustrated in FIG. 4 is larger than the width W2 of the substrate 50 in the radial direction illustrated in FIG. 4 and is larger than a width D1 of the impeller 9 in the radial direction illustrated in FIG. 2. According to such a configuration, a space between the opening 41 of the heat sink 40 and the substrate 50 and the impeller 9 is closed by the plate part 70, and thus the waterproofness can be further improved. By making the width W2 of the substrate 50 in the radial direction smaller than the width D1 of the impeller 9 in the radial direction, the waterproofness of the substrate 50 can also be improved.

The opening 41 is formed at a location not overlapping the rotation axis of the motor 2 in a top view. More specifically, as illustrated in FIG. 2, a portion X1 at the heat sink 40 opposed to the shaft 31 in the Z-axis direction is located at the outside of the opening 41. That is, in an embodiment, a center of the opening 41 does not coincide with a center of the shaft 31. The bearing holder 32 is covered with the heat sink 40 in the Z-axis direction. By offsetting the opening 41 and the rotation axis of the impeller 9 in this manner, as illustrated in FIG. 5, a distance between the opening 52 and the through-hole 72 and the opening 41 is extended. The shaft 31 serving as the rotation axis of the impeller 9 is inserted through the opening 52 and the through-hole 72, and a labyrinth structure is formed. Thus, water intrusion at the negative direction side in the Z-axis direction via the bearing holder 32 inserted through the through-hole 72 can be suppressed, and the waterproofness can be further improved.

On the other hand, the opening 41 of the heat sink 40 and the substrate 50 partially overlap in a top view as illustrated in FIG. 1. In this case, the terminal holes 54 to 56 of the substrate 50 illustrated in FIG. 2 are formed at locations overlapping the opening 41 in a top view. In such a configuration, the terminal 80 and the substrate 50 can be connected by inserting the terminal 80 at the negative direction side in the Z-axis direction, and thus the assemblability of the terminal 80 and the substrate 50 in the fan motor 1 can be improved.

As described above, the fan motor 1 of an embodiment includes the motor 2, the substrate 50, the terminal block 5, and the heat sink 40. The terminal block 5 includes the terminal 80, and the substrate 50 is fixed to the terminal block 5. The heat sink 40 accommodates the motor 2, the substrate 50, and the terminal block 5. The heat sink 40 includes the opening 41, and a part 60 of the terminal block 5 is inserted into the opening 41. The opening 41 has the inner surface 42 opposed to the part 60 of the terminal block 5. The terminal block 5 includes the tubular part 60 having the outer surface 62 opposed to the inner surface 42. An elastic member 6 is disposed between the inner surface 42 and the outer surface 62. In such a configuration, the terminal 80 and the substrate 50 can be easily aligned, and thus the assemblability of the terminal can be improved.

Next, the terminal 80 will be described with reference to FIG. 5. Although only the terminal 85 is illustrated in the cross section illustrated in FIG. 5, the terminals 84 and 86 have the same cross-sectional shape as a cross-sectional shape in FIG. 5, and thus the following description related to the terminal 85 illustrated in FIG. 5 is also applied to the entire terminal 80 including the terminals 84 and 86.

As illustrated in FIG. 5, the terminal 85 includes the first part 81 extending in the rotation axis direction (Z-axis direction) and connected to the substrate 50, and the second part 82 extending in the radial direction and exposed from the terminal block 5. The first part 81 is inserted through the terminal hole 55 of the substrate 50 and soldered, and thus is electrically connected to the substrate 50. As illustrated in FIG. 5, the second part 82 extends in the radial direction (X-axis direction) along the terminal block 5, and has the exposed surface 83 partially exposed from the terminal block 5 at the negative direction side in the Z-axis direction. An external power supply or a control circuit (not illustrated) can be electrically connected to the exposed surface 83.

The exposed surface 83 is accommodated in the inside of the tubular part 60. In other words, the exposed surface 83 is located at the impeller 9 side, that is, at the positive direction side in the Z-axis direction, than the end part of the tubular part 60 at the negative direction side in the rotation axis direction (Z-axis direction). The second part 82 having the exposed surface 83 is disposed at the inside of the circle formed by the flange 71 in the radial direction.

The first part 81 of the terminal 85 is disposed to partially overlap the motor 2 in the radial direction. For example, the motor 2 and the first part 81 overlap in a top view. Thus, the dimension of the fan motor 1 in the Z-axis direction can be made small as compared with a configuration with the first part 81 extending in the Z-axis direction not being overlapping the motor 2 in the radial direction. This contributes to the downsizing of the entire device. Since only a part of the exposed surface 83 of the terminal 85 is exposed, the dimension in the Z-axis direction can be made small as compared with a configuration with the entire being exposed. This contributes to the downsizing of the entire device. The second part 82 having the exposed surface 83 is disposed at the inside of the circle formed by the flange 71 in the radial direction, and thus the terminal 85 can be brought close to the motor 2. Thus, the dimension of the fan motor 1 in the radial direction can be made small.

As illustrated in FIG. 5, the filler 75 is provided adjacent to the terminal 85. The filler 75 functions as a terminal support part and a sealing material, and can improve the waterproof and dustproof performance of the terminal 85. As illustrated in FIG. 3, the fillers 74 and 76 are similarly provided at positions adjacent to the terminals 84 and 86.

### Modified Examples

The configuration of an embodiment has been described above, but the embodiment is not limited to this configuration. For example, the terminal 80 may be fixed to the terminal block 5 in advance before being connected to the substrate 50, and may be fixed by, for example, being press-fitted at the terminal block 5, instead of being insert-molded.

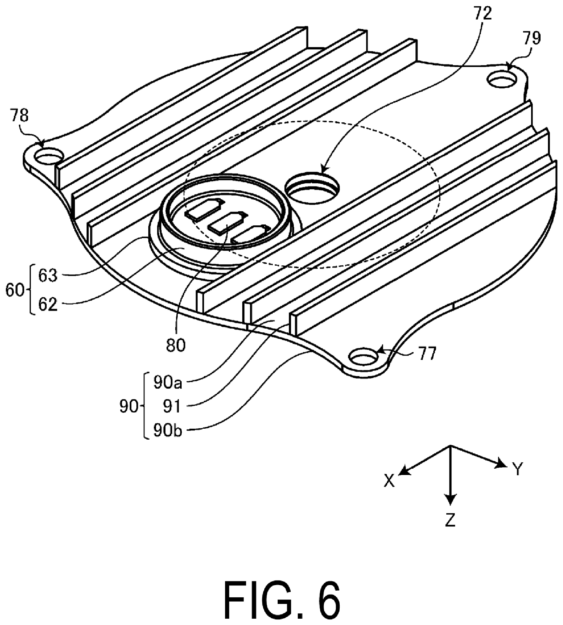

As illustrated in FIG. 6, a plate part 90 in a modified example may include one surface 90a and the other surface 90b facing the rotation axis direction (Z-axis direction), and a rib 91 may be provided on both or one of the one surface 90a and the other surface 90b. FIG. 6 is a perspective view illustrating an example of the plate part in the modified example. The rib 91 may extend radially from a center of the plate part 90, or may extend in the radial direction or the circumferential direction as illustrated in FIG. 6. The rib 91 can increase surface rigidity of the plate part 90, and thus warping of the plate part 90 can be prevented. The tubular part 60 located at the negative direction side in the Z-axis with respect to the plate parts 70 and 90 also prevents the warping of the plate parts 70 and 90.

The elastic member disposed between the inner surface 42 of the opening 41 of the heat sink 40 and the outer surface 62 of the tubular part 60 of the terminal block 5 is not limited to the O-ring 6, and may be another member such as an adhesive having elasticity.

As long as the sealing by the elastic member is possible, the cross-sectional shapes of the opening 41 and the tubular part 60 are not limited to the substantially circular shape as illustrated in FIG. 2 and the like, and may be another shape such as an oval shape or a rectangular shape. In particular, when the adhesive or the like is used as the elastic member, the degree of freedom of the shapes of the opening 41 and the tubular part 60 can be improved.

In an embodiment, the bearing holder 32 is engaged with the through-hole 72 provided at the plate part 70 of the terminal block 5, but the embodiment is not limited to this configuration. For example, the plate part 70 may be configured such that no through-hole is formed in a portion being engaged with the bearing holder 32. For example, in a case of using a sleeve as the bearing, in a case of inserting the bearing by press-fitting from the positive direction side in the Z-axis, or the like, a portion being engaged with the bearing holder 32 may be modified to a recess or the like instead of the through-hole. In such a configuration, the waterproofness by the terminal block 5 can be further improved.

The motor of an embodiment is not limited to the outer-rotor type motor, and may be another motor such as an inner-rotor type.

A relationship between the height of the tip end part of the tubular part 60 and the height of the flange 44 of the opening 41 in the Z-axis direction illustrated in FIG. 3 is an example. For example, by extending the outer surface 62 of the tubular part 60 at the negative direction side in the Z-axis, the outer surface 62 can be used as a guide for pouring the adhesive or the like. Thus, the ease of assembly when the adhesive or the like is interposed between the tubular part 60 and the opening 41 can be improved.

Although the present invention has been described above on the basis of the embodiments and each modified example, the present invention is not limited to the embodiments and each modified example, and it goes without saying that various variations can be made without departing from the gist of the present invention. Various modifications without departing from such gist are also included in the technical scope of the present invention, and this is apparent to those skilled in the art from the description of the claims.

### Reference Signs List

1 Fan motor, 2 Motor, 5 Terminal block, 6 O-ring, 9 Impeller, 10 Stator, 11 Stator core, 12 Coil, 13 Insulator, 20 Rotor, 21 Magnet, 22 Holder, 31 Shaft, 32 Bearing holder, 33 Engagement part, 34, 35 Bearing, 40 Heat sink, 41 Opening, 42 Inner surface, 44 Flange, 45 Fin, 47 to 49 Screw groove, 50 Substrate, 52 Opening, 53 Wiring, 54 to 56 Terminal hole, 60 Tubular part, 62 Outer surface, 63 Step part, 70, 90 Plate part, 71 Flange, 72 Through-hole, 73 Engaged part, 74 to 76 Terminal support part (Filler), 77 to 79 Screw hole, 80, 84 to 86 Terminal, 91 Rib, 97 to 99 Screw

## Claims

1. A rotary electric machine, comprising:
a motor;
a substrate;
a terminal block comprising a terminal, the substrate being fixed to the terminal block; and
a heat sink configured to accommodate the motor, the substrate, and the terminal block, wherein
the heat sink includes an opening,
a part of the terminal block is inserted into the opening,
the opening has an inner surface opposed to the part of the terminal block,
the terminal block comprises a tubular part having an outer surface opposed to the inner surface, and
an elastic member is disposed between the inner surface and the outer surface.

2. The rotary electric machine according to claim 1, wherein
the terminal extending from the interior of the heat sink to the exterior thereof through the opening is fixed to the terminal block, and
the terminal is electrically connected to the substrate.

3. The rotating electric machine according to claim 1, wherein
the terminal block comprises a plate part extending in a direction intersecting the tubular part, and
the plate part is disposed at a location sandwiched between the opening and the substrate when viewed from a rotation axis direction.

4. The rotating electric machine according to claim 1, wherein a width of the opening in a radial direction is smaller than a width of the substrate in the radial direction.

5. The rotating electric machine according to claim 1, wherein the opening is formed at a location not overlapping a rotation axis of the motor in a top view.

6. The rotary electric machine according to claim 1 or 2, wherein
the terminal includes a first part extending in a rotation axis direction and a second part extending in a radial direction,
the first part is connected to the substrate, and
a part of the second part has an exposed surface exposed from the terminal block.
